## Europäisches Patentamt
## European Patent Office
## Office européen des brevets

(11) Veröffentlichungsnummer: **0 162 262 B1**

(12) **EUROPÄISCHE PATENTSCHRIFT**

(45) Veröffentlichungstag der Patentschrift: **20.03.91**

(51) Int. Cl.⁵: **C08J 7/04, C09D 4/02**

(21) Anmeldenummer: **85104255.6**

(22) Anmeldetag: **09.04.85**

Die Akte enthält technische Angaben, die nach dem Eingang der Anmeldung eingereicht wurden und die nicht in dieser Patentschrift enthalten sind.

(54) **Beschichtete Kunststoffolie.**

(30) Priorität: **21.04.84 DE 3415104**

(43) Veröffentlichungstag der Anmeldung:
**27.11.85 Patentblatt 85/48**

(45) Bekanntmachung des Hinweises auf die Patenterteilung:
**20.03.91 Patentblatt 91/12**

(84) Benannte Vertragsstaaten:
**DE FR GB IT NL**

(56) Entgegenhaltungen:
**WO-A-80/00942**
**DE-A- 3 327 929**
**GB-A- 2 082 606**

(73) Patentinhaber: **BAYER AG**

**W-5090 Leverkusen 1 Bayerwerk(DE)**

(72) Erfinder: **Waldenrath, Werner, Dipl.-Ing.**
**Maastrichterstr. 40**
**W-5000 Köln 1(DE)**
Erfinder: **Weber, Hans-Leo, Dipl.Ing.**
**Dahlienweg 7**
**W-4049 Rommerskirchen 2(DE)**
Erfinder: **Claussen, Uwe, Dr.**
**Carl Rumpff-Str. 29**
**W-5090 Leverkusen 1(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Gegenstand der vorliegenden Erfindung ist eine optisch isotrope **oder** einachsige Kunststoffolie aus Polyarylsulfon, Polyurethan oder Polycarbonat, die mit einem Lack beschichtet ist, der durch Härtung eines Gemisches aus einem Prepolymer und einem reaktiven Monomer entstanden ist, wobei das Prepolymer drei bis fünf, beispielsweise 3 oder 4, (Meth)Acryloylgruppen enthält und sich von aliphatischen Polyolen oder Vinylpolymerisaten ableitet, und wobei das reaktive Monomer ein Gemisch aus einem (Meth)Acrylsäureester eines mehrwertigen aliphatischen Alkohols und einer aliphatischen Vinylverbindung ausgewählt aus N-Vinylpyrrolidon oder N-Vinylacetat ist.

Gegenstand der vorliegenden Erfindung ist außerdem die Verwendung der erfindungsgemäßen Kunststoffolie in Flüssigkristall-Sichtanzeigen.

Bei den meisten technischen Anwendungen von Kunststofffolien wirkt sich die häufig vorhandene optische Anisotropie, die zu einer Doppelbrechung führt, nicht aus.

Solche Anwendungen sind z.B. Zeichenfolien in der Kartographie, Informationsträger für Signalanzeigen, Farbfilter, Membranschalter und Reflex-Folien. Dagegen ist die Isotropie eine wichtige Eigenschaft, wenn die Kunststoffolien in optischen Geräten oder Anordnungen verwendet werden, die mit polarisiertem Licht arbeiten. Dies ist z.B. bei den bekannten Flüssigkristall-Anzeigeeinheiten (LCD) der Fall. Die bei solchen Anzeigeeinheiten verwendeten Fenster oder Substrate dürfen keinen störenden Einfluß auf das polarisierte Licht ausüben. Bekanntlich beruht die Doppelbrechung in einem optisch einachsigen Kristall darauf, daß Lichtwellen mit senkrecht aufeinander stehenden Polarisationsebenen in der Regel verschieden starke Ausbreitungsgeschwindigkeiten im Kristall annehmen. Gleichzeitig mit der Doppelbrechung wird der Polarisationszustand des Lichtes verändert. Es leuchtet daher ein, daß die Verwendung von doppelbrechenden Kunststoffolien als Fenster bei Anzeigeeinheiten (Displays) zu großen Schwierigkeiten führt, wenn der Anzeigeeffekt seinerseits auf einer durch das elektrische Feld beeinflußten Doppelbrechung oder Drehung der Polarisationsebene in der flüssigen Kristallschicht beruht. Die Lösung des Problems der Doppelbrechung bildet daher die wesentliche Voraussetzung für die technische Verwendung von Kunststoffolien in Flüssigkristall-Anzeigeeinheiten. Aus diesem Grund wird bei Flüssigkristall-Anzeigen bisher Glas als universeller und einzig technisch brauchbarer Werkstoff eingesetzt. Die Verwendung von Glas ist jedoch mit einer Reihe von Nachteilen verbunden. Wegen der schwierigen Verarbeitung von Glas können nur bestimmte, von der Maschinenausrüstung abhängige Formate bereitgestellt werden, die sich kostengünstig durch Ritzen und Brechen nur auf Rechteckformate unterteilen lassen. Dabei entstehende Glassplitter können die Funktion der Anzeige beeinträchtigen und damit zu Ausfällen führen.

Weiterhin ist der Handhabungs- und Lagerungsaufwand bei den anfallenden hohen Stückzahlen und verschiedenen Formaten erheblich. Darüber hinaus bedingt die Zerbrechlichkeit des Glases Plattenstärken von mindestens 1 mm, so daß sich das Eigengewicht der Glasplatten im Vergleich zu den anderen Bauelementen der Anzeigeeinheit störend bemerkbar macht.

Es hat daher nicht an Versuchen gefehlt, durchsichtige Kunststoffe bei Flüssigkristall-Anzeigen einzusetzen (siehe z.B. US-A-4 228 574, GB-A-2 052 779, SID 81, Seite 86 und Seite 116 und SID 82, Seite 178 bis 181). Kunststoff ist aber in der Regel nicht gleichzeitig isotrop und mechanisch oder chemisch besonders widerstandsfähig. Außerdem läßt sich die Technik der Flüssigkristall-Anzeigen auf der Basis von Glas nicht ohne weiteres auf Kunststoff übertragen. Eine besondere, der Glastechnik unbekannte Schwierigkeit ist die chemische und physikalische Beständigkeit des Hüllenmaterials. Flüssigkris talle und sie enthaltende Mischungen sind Lösungsmittel mit der Eigenschaft, in die Kunststoffmatrix einzudiffundieren. Hierbei verändert sich das Volumen und damit die Dimension des Displays, das seinerseits z.B. gegen Abstandsänderungen der Platten sehr empfindlich ist.

Weiterhin werden die mechanischen Eigenschaften verschlechtert. Entscheidend aber ist, daß das relativ geringe Volumen an flüssigkristalliner Phase durch vollständige oder selektive Diffusion sehr rasch seine Wirkung verliert oder ändert und damit die Anzeige unbrauchbar machen kann. Dies gilt in besonderem Maße, wenn die Anzeige höheren Temperaturen ausgesetzt wird.

Der Erfindung liegt deshalb die Aufgabe zugrunde, beschichtete Kunststoffolien bereitzustellen, die chemisch und physikalisch ausreichend widerstandsfähig sind. Die Aufgabe wird dadurch gelöst, daß in an sich bekannter Weise die Oberfläche des Kunststoffs mit einer speziellen, optisch isotropen Lackschicht versiegelt wird.

Aus der DE-A-3 327 929, Seite 9 ist zwar bekannt, optisch isotrope Kunststoffolien kratzfest auszurüsten, indem man diese u.a. mit Polyacrylaten oder Polymethacrylaten beschichtet. Einzelheiten über die einzusetzenden Polyacrylate oder Polymethacrylate sind dieser Literaturstelle jedoch nicht zu entnehmen.

Aus der DE-A-3 127 346 ist die Beschichtung von Polymeren wie Polycarbonaten oder Polysulfonen durch aushärtbare Acrylatharze bekannt, deren Hauptbestandteile sich von Verbindungen mit mindestens 3 Acryloyloxygruppen und bzw. oder Methacaryloyloxygruppen im Molekül ableiten, und zwar vorzugsweise zu mindestens 90 Gew.-%. Als derartiges Monomer ist beispielsweise Trimethyloylpropantrimethacrylat genannt. (Seite 13 der DE-A). Die zusätzliche Mitverwendung von N-Vinylpyrrolidon oder Viylacetat ist jedoch weder angesprochen noch nahegelegt.

Eine Kunststoffolie ist biegsam, ihr besonderer Vorteil ist die Aufrollbarkeit. Ein Lacksystem muß diese Eigenschaften ebenfalls haben; der Lack darf also beim Biegen oder Rollen weder brechen noch abspringen. Diese Eigenschaften liefern niedrig vernetzte Systeme, die aber nicht diffusionsstabil sind. Hochvernetzte Systeme bilden beim Biegen leicht Haarrisse oder platzen sogar ab, wodurch ihre Diffusionsstabilität hinfällig wird.

Ein reaktives Monomeres ist Trimethylolpropantri(meth)acrylat.

Die Lacke sind direkt unter Elektronenstrahlen härtbar oder nach Zusatz von 1 bis 5 Gew.-% an handelsüblichen Photoinitiatoren wie aromatischen Ketonen oder Benzoinderivaten speziell in Kombination mit aliphatischen tert. Amin-Beschleunigern.

Die gemäß der vorliegenden Erfindung eingesetzten Lacke können in allen in der Lackindustrie üblichen Mischaggregaten wie z.B. Dissolver oder Perlmill hergestellt werden.

Die Applikation erfolgt durch z.B. Walzen oder Rakeln. Die aufgetragenen Schichtdicken liegen bei 2 bis 50 $\mu$m, bevorzugt 5 bis 15 $\mu$m.

Die Schicht kann ein- oder beidseitig aufgebracht werden.

Durch diese Beschichtung wird nicht nur die Wasserdampfdurchlässigkeit vermindert, sondern auch die Chemikalienfestigkeit ganz erheblich verbessert.

Als Kunststoffe kommen solche in Frage, die klar durchsichtige Gebilde liefern und sich optisch einachsig oder isotrop herstellen lassen.

Erfindungsgemäss verbendete Kunststoffe sind Polyarylsulfone, insbesondere Polyphenylsulfonether oder Polyurethane. Ganz besonders bevorzugt werden Polycarbonate.

Als Polycarbonate im Sinne der Erfindung kommen die durch Umsetzung von aromatischen Dihydroxyverbindungen, insbesondere von Dihydroxydiarylalkanen mit Phosgen oder Diestern der Kohlensäure erhältlichen Polykondensate in Betracht, obwohl neben den unsubstituierten Dihydroxydiarylalkanen auch solche geeignet sind, deren Arylreste in o- und/oder m-Stellung zur Hydroxylgruppe Methylgruppen oder Halogenatome tragen. Ebenso sind verzweigte Polycarbonate geeignet. Bevorzugt ist gegossenes Polycarbonat.

Die Polycarbonate haben mittlere Gewichtsmittel der Molekulargewichte $\overline{M}$ w zwischen 10 000 und 100 000, vorzugsweise zwischen 20 000 und 40 000, die durch Messung von $\eta_{rel}$ in CH$_2$Cl$_2$ bei 20°C und einer Konzentration von 0,5 g pro 100 ml ermittelt werden. $\overline{M}$ w für Polycarbonat-Gußmaterial beträgt vorzugsweise 75 000 bis 110 000.

Geeignete aromatische Dihydroxyverbindungen sind z.B. Hydrochinon, Resorcin, 4,4'-Dihydroxydiphenyl, Bis-(hydroxyphenyl)alkane wie beispielsweise C$_1$-C$_8$-Alkylidenbisphenole, Bis-(hydroxyphenyl)-cycloalkane wie beispielsweise C$_5$-C$_{15}$-Cycloalkylen- bzw- C$_5$-C$_{15}$-Cycloalkylidenbisphenole, Bis-(hydroxy-phenyl)-sulfide, -ether, -ketone, -sulfoxide oder -sulfone, ferner L,L'-Bis-(hydroxyphenyl)-diisopropyl-benzol sowie die entsprechenden kernalkylierten bzw. kernhalogenierten Verbindungen.

Bevorzugt sind Polycarbonate auf Basis Bis-(4-hydroxyphenyl)-propan-2,2 (Bisphenol-A), Bis-(4-hydroxy-3,5-dichlor-phenyl)-propan-2,2 (Tetrachlorbisphenol-A), Bis-(4-hydroxy-5,5-dibrom-phenyl)-propan-2,2 (Tetrabrombisphenol A), Bis-(4-hydroxy-3,5-dimethylphenyl)-propan-2,2 (Tetramethylbisphenol A), Bis-(4-hydroxy-phenyl)-cyclohexan-1,1 (Bisphenol Z) sowie auf Basis von Drei kernbisphenolen wie L,L'-(Bis-(4-hydroxyphenyl)-p-diisopropylbenzol.

Weitere für die Herstellung von Polycarbonaten geeignete aromatische Dihydroxyverbindungen sind in den US-Patenten 2 970 131, 2 991 273, 2 999 835, 2 999 846, 3 028 365, 3 062 781 und 3 271 367 beschrieben.

Geeignete Polyarylsulfone im Sinne der Erfindung haben mittlere Gewichtsmittelmolekulargewichte $\overline{M}$ w (gemessen nach der Lichtstreumethode in CHCl$_3$) zwischen 1 000 und 200 000, vorzugsweise zwischen 20 000 und 60 000. Beispiele dafür sind die nach bekannten Verfahren erhältlichen Polyarylsulfone aus 4,4'-Dichlordiphenylsulfon und einem Bisphenol, insbesondere 2,2-Bis-(4-hydroxyphenyl)-propan, mit mittleren Gewichtsmittelmolekulargewichten yw von 2 000 bis 200 000.

Die Herstellung optisch einachsiger Kunststoffe kann beispielsweise durch Gießen oder Extrudieren geschehen, aber es läßt sich kein universelles Verfahren angeben. Prinzipiell ist es notwendig, den Polymerverband beweglich zu machen und ihn unter Anwendung einer gerichteten Kraft zu orientieren.

Friert man jetzt diese Beweglichkeit unter dem Einfluß einer richtenden Kraft ein, so entsteht ein optisch einachsiger Kunststoff.

Bevorzugt sind Gußverfahren, bei denen das Polymer in einem geeigneten, möglichst leichtflüchtigen Lösungsmittel gelöst wird und nachfolgend zu einer Schicht ausgegossen wird, aus der das Lösungsmittel z.B. durch Verdampfen entfernt werden kann. Besonders geeignet für diesen Prozeß ist Polycarbonat.

Besonders bevorzugt ist auch ein neues Verfahren, bei dem zunächst in bekannter Weise durch Gießen oder Extrudieren eine doppelbrechende Kunststoffolie hergestellt wird und anschließend in oberflächennahen Schichten der Folie durch Strahlungswärme oder durch Tauchen in ein Lösungs- oder Quellungsmittel irreversible Struktur-Relaxationsprozesse ausgelöst werden, die eine molekulare Umorientierung in den oberflächennahen Schichten bewirken, welche nach dem Abkühlen bzw. nach dem Trocknen der Folie bestehen bleibt und eine Aufhebung bzw. Kompensation der Doppelbrechung zur Folge hat. Durch die thermische Behandlung oder alternativ durch den Tauchprozeß wird der molekulare Verband der Moleküle in oberflächennahen Zonen offensichtlich so stark gelockert, daß eine molekulare Umorientierung (Relaxation) ermöglicht wird und die Doppelbrechung nahezu ganz verschwindet. Überraschend ist, daß diese Umorientierung irreversibel bleibt; d.h. beim Abkühlen bzw. Trocknen sozusagen eingefroren wird. Wesentlich ist dabei, daß die Folie nur für eine relativ kurze Zeit der Strahlungswärme oder dem Lösungs- oder Quellungsmittel ausgesetzt wird.

Durch die Strahlungswärme werden also vorübergehend oberflächennahe Schichten der Folie aufgeheizt, während das Volumen nicht oder nur kaum erfaßt wird. Dies gilt vor allem für Strahlungsquellen, deren Wellenlänge im Gebiet einer Absorptionsbande des Folienmaterials liegt. Über die Wellenlänge kann die Eindringtiefe der Strahlung gesteuert werden. Unter einer "oberflächennahen Schicht" wird hier definitionsgemäß ein Bereich verstanden, der 10 bis 30 %, vorzugsweise 15 bis 20 % der Gesamtdicke der Folie entspricht. Im Gegensatz dazu steht der in der Technik häufig angewandte Temperprozeß, bei dem das gesamte Materialvolumen unter stationären Bedingungen aufgeheizt wird.

In analoger Weise erfolgt die Behandlung der Folie in einem Tauchbad nur während einer so kurzen Zeit, daß nicht die gesamte Folie von dem Lösungsmittel durchtränkt wird, sondern das Lösungsmittel nur in die äußeren, oberflächennahen Schichten eindiffundieren kann. Das Eindringen der Lösungsmittelfront in die Folie kann mit einem Interferenzmikroskop sichtbar gemacht werden. Eine Schrumpfung der Folie, wie sie als Folge einer länger dauernden Einwirkung des Lösungs- bzw. Quellmittels auftritt, konnte bei den hier durchgeführten Versuchen nicht beobachtet werden. Nach dem Trocknen erhält man eine Folie mit einer glasklaren Oberfläche hoher optischer Güte.

Die ursprünglich vorhandene Doppelbrechung wird durch die thermische Behandlung oder alternativ durch die Tauchbadbehaldlung so stark reduziert, daß praktisch keine Änderung des Polarisationszustandes eintritt, wenn diese Folien in Verbindung mit LCD-Displays verwendet werden. Eine mögliche Erklärung für die Reduzierung der Doppelbrechung esteht darin, daß, bedingt durch den Herstellungsprozeß (Gießen), in oberflächennahen Schichten grichtete Molekülstrukturen vorhanden sind, die eine Anisotropie und damit optische Doppelbrechung verursachen. Bei der Erwärmung und ebenso beim Anlösen dieser Schichten wird nun der Molekularverband gelockert und die Beweglichkeit der Moleküle so weit erhöht, daß die oben erwähnten Ausgleichs- und Relaxationsvorgänge stattfinden können und die Anisotropie weitgehend verschwindet. Beim nachfolgenden trocknen wird die Beweglichkeit dann wieder "eingefroren". Dabei bleibt überraschenderweise die molekulare Umorientierung in den oberflächennahen Schichten erhalten.

Zweckmäßig geht man von gegossenen Kunststoffolien aus, deren Dicke im Bereich von 5 μm bis 0,8 mm liegt. Die anschließende Behandlung mit einem Quellungs- oder Lösungsmittel erfolgt in der Weise, daß die Folien in einem Bad 1 s bis 5 min, vorzugsweise 10 s bis 2 min dem Lösungs- bzw. Quellungsmittel ausgesetzt werden. Die Behandlung erfolgt bei Raumtemperatur. Die Trocknung der angelösten oder angequollenen Folien erfolgt in einem Luftstrom bei Temperaturen von 20° bis 140° C.

Als Ausgangsmaterial für die Folien werden vorteilhaft Polymere verwendet, für die ein Lösungs- oder Quellungsmittel angegeben werden kann, das neben dem gewünschten Isotropie-Effekt keine unerwünschten Nebeneffekte wie z.B. Trübung erzeugt und eine klare homogene Oberfläche liefert. In Frage kommt z.B. Polysulfon.

Geeignete Lösungsmittel bzw. Quellmittel fdür die erforderliche Behandlung sind Xylol, Cyclohexanon, Tetrahydrofuran, Methylethylketon, Toluol, Benzylalkohol, Dimethylformamid, Methylenchlorid, Aceton, Ethylacetat, Ethylenchlorid, Trichlorethan, Chloroform, m-Kresol, Pyridin, Dioxan, Benzol, Chlorbenzol, Tetralin, Ethylacetat, Acetonitril, Tetrachlorkohlenstoff.

Besonders bewährt haben sich Polycarbonat-Folien, die vorteilhaft in ein Tetrahydrofuranbad getaucht werden.

Die neuen beschichteten Folien sind zur Herstellung von Anzeigegeräten mit hoher Wärmebelastbarkeit und geringer Wasserdampfdurchlässigkeit geeignet, vorzugsweise für Automobil-Anzeigen.

**Ansprüche**

1. Optisch isotrope oder einachsige Kunststoffolie aus Polyarylsulfon, Polyurethan oder Polycarbonat, die mit einem Lack beschichtet ist, der durch Härtung eines Gemisches aus einem Prepolymer und einem reaktiven Monomer entstanden ist, wobei das Prepolymer drei bis fünf (Meth)Acryloylgruppen enthält und sich von aliphatischen Polyolen oder Vinylpolymerisaten ableitet und wobei das reaktive Monomer ein Gemisch aus einem (Meth)Acrylsäureester eines mehrwertigen aliphatischen Alkohols und einer aliphatischen Vinyl-Verbindung, ausgewählt aus N-Vinylpyrrolidon oder Vinylacetat ist.

2. Kunststoffolien gemäß Anspruch 1, dadurch gekennzeichnet, daß das Prepolymer 3 oder 4 (Meth)Acryloylgruppen enthält.

3. Kunststoffolie gemäß Anspruch 1, dadurch gekennzeichnet, daß der (Meth)Acrylsäureester Trimethylolpropantri(meth)acrylat ist.

4. Polycarbonatfolie gemäß den Ansprüchen 1 bis 3.

5. Verwendung einer Kunststoffolie gemäß den Ansprüchen 1 bis 4 in Flüssigkristall-Sichtanzeigen.

## Claims

1. Optically isotropic or monoaxial synthetic resin film of polyarylsulphone, polyurethane or polycarbonate coated with a lacquer which has been obtained by hardening a mixture of a prepolymer and a reactive monomer, the prepolymer containing three to five (meth)acryloyl groups and being derived from aliphatic polyols or vinyl polymers and the reactive monomer being a mixture of a (meth)acrylic acid ester of a polyhydric aliphatic alcohol and an aliphatic vinyl compound selected from N-vinylpyrrolidone and vinyl acetate.

2. Synthetic resin films according to Claim 1, characterised in that the prepolymer contains 3 or 4 (meth)acryloyl groups.

3. Synthetic resin film according to Claim 1, characterised in that the (meth)acrylic acid ester is trimethylolpropane tri(meth)acrylate.

4. Polycarbonate film according to Claims 1 to 3.

5. Use of a synthetic resin film according to Claims 1 to 4 in liquid crystal visual displays.

## Revendications

1. Pellicule en matière plastique optiquement isotrope ou uniaxiale, en polyarylsulfone, polyuréthanne ou polycarbonate, qui est revêtue d'une laque produite par durcissement d'un mélange d'un prépolymère et d'un monomère réactif, le prépolymère contenant 3 à 5 groupes (méth)acryloyle et étant dérivé de polyols aliphatiques ou de polymérisats vinyliques et le monomère réactif étant un mélange d'un ester d'acide méth(acrylique) d'un alcool aliphatique polyvalent et d'un composé vinylique aliphatique, choisi entre la N-vinylpyrrolidone ou l'acétate de vinyle.

2. Pellicule en matière plastique suivant la revendication I, caractérisée en ce que le prépolymère contient 3 ou 4 groupes (méth)acryloyle.

3. Pellicule en matière plastique suivant la revendication I, caractérisée en ce que l'ester d'acide méth(acrylique) est le (méth)acrylate de triméthylolpropane.

4. Pellicule en polycarbonate suivant les revendications I à 3.

5. Utilisation d'une pellicule en matière plastique suivant les revendications I a 4 dans des affichages à cristaux liquides.